# EUROPÄISCHE PATENTSCHRIFT

(11) **EP 0 592 843 B1**
(45) Veröffentlichungstag und Bekanntmachung des Hinweises auf die Patenterteilung: **13.03.1996**
(21) Anmeldenummer: 93115158.3
(22) Anmeldetag: 21.09.1993
(51) Int. Cl.: F16B 12/20, F16B 5/06

(54) **Beschlag, insbesondere zum Verbinden von Platten**
Mounting, in particular for joining plates
Ferrure, en particulier pour la connexion de plaques

(30) Priorität: 10.10.1992 DE 9213729 U
(43) Veröffentlichungstag der Anmeldung: 20.04.1994
(73) Patentinhaber: HÄFELE GmbH & Co., D-72202 Nagold (DE)
(72) Erfinder: Walz, Rüdiger, D-71159 Mötzingen (DE)
(74) Vertreter: Schmid, Berthold, Dipl.-Ing.

(56) Entgegenhaltungen:
- EP-A- 0 327 753
- DE-A- 1 957 113
- DE-U- 9 213 729
- GB-A- 2 069 091
- US-A- 2 429 103

## Beschreibung

Die Erfindung bezieht sich auf einen Beschlag, insbesondere zum Verbinden von Platten mit eines in einen Einsetztopf einschiebbaren Verbindungsglied, wobei eine schräg zur Einschubrichtung im Einsetztopf drehbar gelagerte Spannschraube mit ihres Einschraubende an der vorderen Innenkante einer Ausnehmung im Verbindungsglied angreift. Derartige bekannte Beschläge werden meist im Möbel- oder Innenausbau eingesetzt. Dabei ist es beim Zusammenbau von Platten erwünscht, daß die Bauteile noch vor der endgültigen Festlegung einen gegenseitigen Halt haben, da die montierende Person nicht gleichzeitig die Platten halten und die Beschläge feststellen kann.

Das EP 0 327 753 zeigt bereits einen Beschalg, bei welchem ein vorläufiges Einrasten der Beschlagteile möglich ist. Dabei ist das Verbindungsglied als Bolzen ausgebildet, dessen verbreiteter Kopf einerseits einen nach innenragenden Wulst des Einsetztopfes und andererseits eine Haltefläche des Spannschraube hintergreift. Um den Bolzenkopf für ein vorläufiges Einrasten über den Wulst und die Anlagefläche des Spannschraube hinwegbewegen zu können, ist der ganze Einsetztopf aus elastischem Material gestaltet, so daß aussschließlich durch die Elastizität des Einsetztopfes ein Einsetzen möglich ist. Dies hat jedoch den großen Nachteil, daß die vorläufige Verbindung, vor allem beim Zusammensetzen von Möbeln mit größeren und schwereren Platten, sich wieder ungewollt lösen kann. Wenn jedoch eine zu geringe Elastizität des Einsetztopfes gewälht wird, ist wiederum das vorläufige Einsetzen nur mit großer Kraftanstrengung möglich, so daß man hierzu eine Einzelperson nicht mehr in der Lage ist. Hinzukommt, daß auch nach dem völligen Eindrehen der Spannschraube keine feste sondern nur eine elastische Verbindung zwischen des einzelnen Platten erfolgt, so daß bei einer schweren Belastung unter Umständen kein dichtes Anliegen der Teile aneinander mehr gewährleistet ist.

Es ist deshalb die Aufgabe des Erfindung, einen derartigen Beschlag so zu gestalten, daß einerseits ein vorläufiges Einrasten der Beschlagteile ohne Kraftaufwand ermöglicht wird und andererseits sowohl die vorläufige als auch die endgültige Verbindung unlösbar sind. Dies wird erfindungsgemäß durch die Merkmale des kennzeichnenden Teils des Hauptanspruches erreicht.

Wenn man beim erfindungsgemäßen Beschlag die Spannschraube vor dem Zusammensetzen der Teile so weit eindreht, daß das Einschraubende etwas unterhalb der Oberfläche des Verbindungsgliedes zu liegen kommt, dann wird beim Einschieben des Verbindungsgliedes die mit Spiel angeordnete Schraube durch die Auflaufschräge zurückgedrückt und greift dann anschließend hinter des vorderen Innenkante der Ausnehmung rastend ein, so daß zwischen den Platten eine vorläufige Verbindung entsteht. Anschließend kann dann die Spannschraube weiter eingedreht werden, so daß die Platten fest gegeneinander gezogen werden.

Um zwischen dem Einschraubende der Spannschraube und der vorderen Innenkante der Ausnehmung eine Flächenberührung zu erhalten und damit große Spannkräfte aufbringen zu können, ist die Spannschraube an ihrem Einschraubende als quer zur Schraubenlängsachse ebene Fläche ausgebildet, wobei die mit ihr zusammenwirkende Innenkante der Ausnehmung etwa parallel zu dieser Fläche abgeschrägt ist und verläuft. Vorzugsweise wird für die Spannschraube eine Vierkantmutter verwendet, welche in einem senkrecht zur Längsachse der Spannschraube im Einsetztopf angeordneten Längsschlitz mit Spiel gleitend gelagert ist. Die gleitende Lagerung ermöglichst dabei das für die Verrastung erforderliche Spiel.

Weiterhin ist es von Vorteil, wenn das Verbindungsglied einen insbesondere in einer Ausnehmung des Einsetztopfes liegenden Anschlag aufweist. Hierdurch wird ein bündiges Anlegen Platten aneinander ermöglicht. Dabei ist zweckmäßigerweise der Anschlag als senkrecht aus der Ebene des Verbindungsgliedes abgewinkelte Nase ausgebildet.

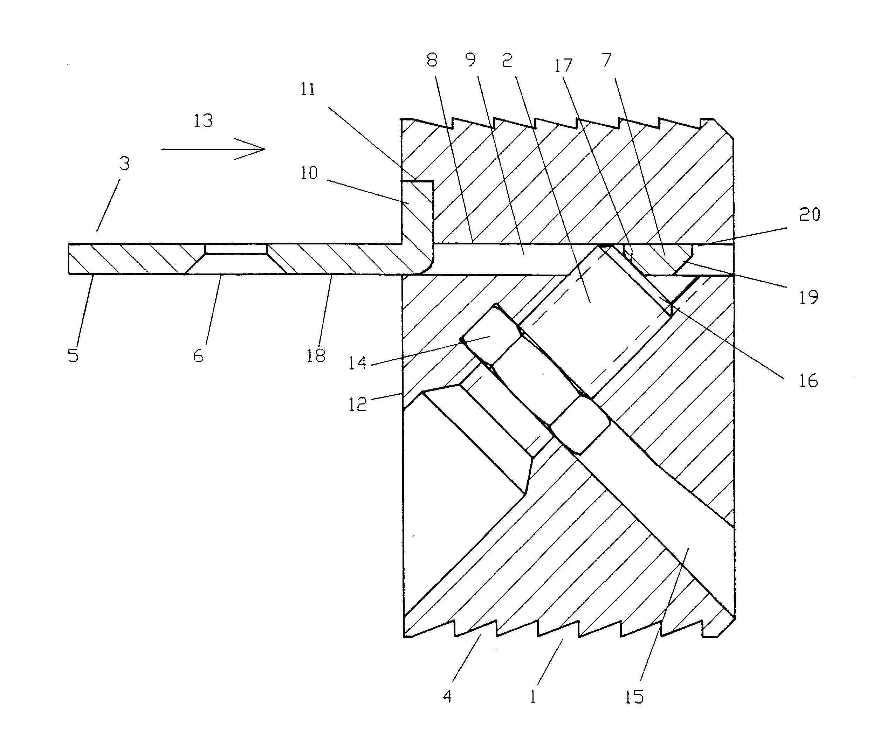

Die Zeichnung zeigt ein Ausfürungsbeispiel der Erfindung, und zwar einen Querschnitt des Beschlages.

Der Beschlag setzt sich zusammen aus einem Einsetztopf 1, einer Spannschraube 2 und einem Verbindungsglied 3. Der Einsetztopf 1 ist an seinem Außenumfang mit wierderhakenförmigen Rillen 4 versehen, welche ihm nach dem Einsetzen in das Bohrloch einer nicht dargestellten Platte den nötigen Halt geben. Das Verbindungsglied 3 ist an seinem hinteren Ende 5 mit einer Bohrung 6 versehen, um mit einer weiteren nicht dargestellten Platte verschraubt zu werden. Das Vorderende 7 ist in einen parallel zur Mittelasche des Einsetztopfes 1 vorgesehenen Schlitz 8 eingeschoben und mit einer rechteckigen Ausnehmung 9 versehen. Am hinteren Ende der Ausnehmung 9 ist aus dieser senkrecht nach oben eine Nase 10 abgewinkelt, welche als Anschlag einerseits für die anzuschraubende platte und andererseits für den Einsetztopf 1 dient. Für diese Nase 10 ist eine Vertiefung 11 im Einsetztopf 1 vorgesehen, so daß die Nase 10 bündig mit der Vorderfläche 12 des Einsetztopfes 1 abschließt.

Die Spannschraube 2 ist in einem Winkel von 45° zur Einschubrichtung 13 des Verbindungsgliedes 3 im Einsetztopf 1 in einer Vierkantmutter 14 gelagert. Diese Vierkantmutter 14 befindet sich in einem Längsschlitz 15 des Einsetztopfes 1 und ist in diesem unverdrehbar, jedoch leicht längsverschiebbar gelagert, so daß sich ein gewisses Spiel für die Spannschraube 2 ergibt. Das Einschraubende 16 der Spannschraube 2 ist als ebene Fläche ausgebildet. Die vordere Innenkante 17 der Ausnehmung 9 ist so abgeschrägt, daß sie parallel zu der Fläche des Einschraubendes 16 verläuft. Dadurch ergibt sich eine Flächenauflage der Teile gegeneinander, wodurch das Aufbringen höherer Kräfte ermöglicht wird.

Vor dem Zusammensetzen der nicht dargestellten Platten wird der Einsetztopf 1 in eine Bohrung der einen Platte eingeschlagen und die andere mit dem Verbindungsglied 3 verschraubt. Vor dem Einsetzten des Verbindungsgliedes 3 in den Einsetztopf 1 ist die Spannschraube 2 soweit eingedreht worden, daß sie geringfügig unter die Oberfläche 18 des Verbindungsgliedes 3 zu liegen kommt. Dieses weist an seiner vorderen Kante 19 eine Auflaufschräge 20 auf. Beim Einschieben des Verbindungsgliedes 3 wird die Spannschraube 2 aufgrund des geringen vorhandenen Spieles durch die Auflaufschräge 20 angehoben, bis das Einschraubende 16 hinter die vordere Innenkante 17 zu liegen kommt und dort einrastet. Damit ist eine vorläufige Verbindung der Teile geschaffen. Anschließend wird dann die Spannschraube 2 weiter eingedreht, wodurch das Verbindungsglied 3 in Einschubrichtung 13 gepreßt und eine feste unlösbare Verbindung der Platten hergestellt wird.

## Patentansprüche

1. Beschlag, insbesondere zum Verbinden von Platten mit einem in einen Einsetztopf (1) einschiebbaren Verbindungsglied (3), wobei eine schräg zur Einschubrichtung (13) im Einsetztopf (1) drehbar gelagerte Spannschraube (2) mit ihrem Einschraubende (16) an der vorderen Innenkante (17) einer Ausnehmug (9) im Verbindungsglied (3) angreift, dadurch gekennzeichnet, daß die Spannschraube (2) in einer drehfest im Einsetztopf (1) angeordneten Mutter (14) gelagert ist, das Verbindungsglied (3) in Einschubrichtung (13) vor der Ausnehmung (9) eine in Gegenrichtung ansteigende Auflaufschräge (20) für die Spannschraube (2) aufweist und die Mutter (14) mit einem das Anheben der losen Spannschraube (2) über die Auflaufschräge (20) zulassendem Spiel gelagert ist.

2. Beschlag nach Anspruch 1, dadurch gekennzeichnet, daß die Spannschraube (2) an ihrem Einschraubende (16) als quer zur Schraubenlängsachse ebene Fläche ausgebildet und die mit ihr zusammenwirkende Innenkante (17) der Ausnehmung (9) etwa parallel zu dieser Fläche abgeschrägt ist und verläuft.

3. Beschlag nach einem oder beiden der vorhergehenden Ansprüche, gekennzeichnet durch eine Vierkantmutter (14), welche in einem senkrecht zur Längsachse der Spannschraube (2) im Einsetztopf (1) angeordneten Längsschlitz (15) mit Spiel gleitend gelagert ist.

4. Beschlag nach einem oder mehreren der vorhergehenden Ansprüche, dadurch gekennzeichnet, daß das Verbindungsglied (3) einen insbesondere in einer Ausnehmung (11) des Einsetztopfes (1) liegenden Anschlag (10) aufweist.

5. Beschlag nach Anspruch 4, dadurch gekennzeichnet, daß der Anschlag als senkrecht aus der Ebene des Verbingungsgliedes (3) abgewinkelte Nase (10) ausgebildet ist.

6. Beschlag nach einem oder mehreren der vorhergehenden Ansprüchen, dadurch gekennzeichnet, daß zur selbsthemmenden Lagerung der Spannschraube (2) die Bohrung für die Spannschraube (2) im Bereich der Vierkantmutter (14) verengt ist.

## Claims

1. Cover, in particular for connecting plates to a connecting member (3) which can be pushed into an insertion pot (1), in which connection a tightening screw (2), which is rotatably mounted in the insertion pot (1) at an angle to the direction of screwing-in (13), is applied, with the screwing-in end (16) thereof, to the front inner edge (17) of a recess (9) in the connecting member (3), characterised in that the tightening screw (2) is mounted in a nut (14) which is disposed in a manner secure against rotation on the insertion pot (1), the connecting member (3) comprises, a run-up slope (20) for the tightening screw (2) in front of the recess (9) in the direction of insertion (13), which run-up slope ascends in the opposite direction, and the nut (14) is mounted with a clearance which permits the lifting of the loose tightening screw (2) over the run-up slope (20).

2. Cover according to Claim 1, characterised in that the tightening screw (2) is formed, at the end (16) thereof, which is to be screwed in, as a plane surface which is transverse to the longitudinal axis of the screw and the inner edge (17) of the recess (9), which inner edge cooperates therewith, is tapered approximately parallel to this surface and extends in the same direction.

3. Cover according to one or both of the preceding claims, characterised by a square nut (14) which is mounted with clearance in an elongate slot (15) which is disposed in the insertion pot (1) perpendicular to the longitudinal axis of the tightening screw (2).

4. Cover according to one or more of the preceding claims, characterised in that the connecting member (3) comprises an abutment (10) which is located in particular in a recess (11) of the insertion pot (1).

5. Cover according to Claim 4, characterised in that the abutment is formed as a nose (10) which is angled in a perpendicular manner out of the plane of the connecting member (3).

6. Cover according to one or more of the preceding claims, characterised in that the bore for the tightening screw (2) is narrowed in the vicinity of the square nut (14) to effect self-locking mounting of the tightening screw (2).

## Revendications

1. Garniture, notamment pour assembler des panneaux avec un élément d'assemblage (3) pouvant être inséré dans une cavité de mise en place (1), une vis de serrage (2) montée de manière rotative dans la cavité de mise en place (1) et disposée en biais par rapport au sens d'insertion (13) étant appliquée avec son extrémité de vissage (16) contre l'arête intérieure avant (17) d'un évidement (9) dans l'élément d'assemblage (3), caractérisée en ce que la vis de serrage (2) est montée dans un écrou (14) disposé de manière fixe en rotation dans la cavité de mise en place (1), en ce que l'élément d'assemblage (3) présente devant l'évidement (9) par rapport au sens d'insertion (13) un plan incliné (20) montant en sens inverse pour la vis de serrage (2), et en ce que l'écrou (14) est monté avec un jeu permettant de soulever la vis de serrage (2) desserrée par le biais du plan incliné (20).

2. Garniture selon la revendication 1, caractérisée en ce que la vis de serrage (2) est réalisée à son extrémité de vissage (16) sous la forme d'une surface plane transversale par rapport à l'axe longitudinal de la vis, et en ce que l'arête intérieure (17) de l'évidement (9) coopérant avec la vis est inclinée et s'étend approximativement parallèlement à cette surface.

3. Garniture selon l'une ou les deux revendications précédentes, caractérisée par un écrou carré (14) qui est monté de manière coulissante avec un jeu dans une fente longitudinale (15) disposée dans la cavité de mise en place (1) et perpendiculaire à l'axe longitudinal de la vis de serrage (2).

4. Garniture selon l'une ou plusieurs des revendications précédentes, caractérisée en ce que l'élément d'assemblage (3) présente une butée (10) qui est notamment située dans un évidement (11) de la cavité de mise en place (1).

5. Garniture selon la revendication 4, caractérisée en ce que la butée est réalisée sous la forme d'un ergot (10) perpendiculaire au plan de l'élément d'assemblage (3).

6. Garniture selon l'une ou plusieurs des revendications précédentes, caractérisée en ce que, pour monter la vis de serrage (2) de manière à ce qu'elle soit autobloquante, le perçage pour la vis de serrage (2) est rétréci dans la zone de l'écrou carré (14).
